# DEMANDE DE BREVET EUROPEEN

(11) **EP 1 322 092 A1**
(43) Date de publication de la demande: **25.06.2003**
(21) Numéro de dépôt: 02364045.1
(22) Date de dépôt: 06.12.2002
(51) Int. Cl.: H04L 29/06, H04L 12/66

(54) **Procédé d'accès d'un terminal à des données d'un réseau externe, basé sur la notion de domaine de services**

(30) Priorité: 12.12.2001 FR 0116064
(71) Demandeur: Cegetel Groupe, 92915 Paris La Défense (FR)
(72) Inventeur: Bouthors, Nicolas, 38240 Meylan (FR); Loesch, Jean-Jacques, 38000 Grenoble (FR)
(74) Mandataire: Vidon, Patrice

(57) **Abrégé**

L'invention concerne un procédé d'accès d'au moins un terminal d'au moins un réseau de communication à des données gérées par au moins un serveur de données d'au moins un réseau externe. Selon l'invention, on définit au moins un domaine de service, correspondant à au moins une portion des données d'au moins un desdits serveurs. Lors d'un accès par ledit au moins un terminal à des données appartenant audit domaine de service, on gère, dans au moins une passerelle assurant la liaison entre lesdits réseaux, une session de service et on effectue au moins un traitement particulier.

## Description

La présente invention concerne un procédé d'accès d'au moins un terminal d'au moins un réseau de communication à des données gérées par au moins un serveur de données d'au moins un réseau externe.

Un tel procédé peut être mis en oeuvre pour tous types de réseaux d'accès, notamment l'ADSL, le câble ou un réseau de radiocommunication mobile.

Pour ce qui est des réseaux de radiocommunication ces derniers utilisent par exemple la norme GSM (pour "Global System for Mobile communications" en anglais), ou une norme équivalente ou concurrente telle que DCS 1800 (pour "Digital Cellular System à 1800 Mhz", en anglais), PCS 1900 (pour "Personal Communication System à 1900 MHz" en anglais), DECT (pour "Digital European Cordless Telecommunications" en anglais, GPRS (pour "General Packet Radio Service" en anglais) ou UTMS (pour "Universal Mobile Telecommunication System" en anglais).

Par réseau externe, on entend un réseau indépendant du réseau d'accès. Il s'agira souvent d'un réseau filaire et on considèrera à titre d'exemple le réseau Internet.

Un tel réseau (externe) permet à un fournisseur de services de mettre à disposition des bases d'informations au moyen de serveurs de données. Dans le langage courant, chaque base d'informations est un « site web ».

De préférence on considère le cas où le terminal accède à chaque serveur de données par l'intermédiaire d'une passerelle. Le terme de passerelle est couramment employé en relation avec le protocole WAP (pour « Wireless Application Protocol » en anglais), protocole qui définit un mode de transmission de données sur le réseau Internet entre le terminal et le serveur. La passerelle est donc disposée entre le réseau d'accès et le réseau externe. Ce terme doit se comprendre dans son sens le plus large eu égard à la fonction qu'il assure. Il englobe notamment les équipements du type « proxy » qui sont des serveurs d'accès spécifiques également prévus pour l'interconnexion du réseau d'accès et du réseau externe.

A ce jour, les informations composant les bases d'informations des serveurs de données sont totalement indifférenciées, ce qui limite la gestion de ces informations. En d'autres termes, l'utilisateur n'accède pas à un service mais à un serveur de données, ou à plusieurs serveurs de données successivement.

Les systèmes ou procédés de l'état de la technique en particulier dans le monde de la radiocommunication mobile présentent de ce fait des inconvénients majeurs. En effet, ils n'apportent ni ne prévoient de solutions de tarification modulant transactions types, durées et volumes de données, c'est-à-dire tenant compte notamment des données auxquelles l'utilisateur accède à partir de son terminal mobile. L'opérateur ne dispose d'aucun mécanisme lui permettant de valoriser sa position, à l'interface entre le réseau de radiocommunication et le réseau externe. En outre, pour chaque type de service utilisé, l'utilisateur est tenu de changer de passerelle (par exemple de type WAP).

La présente invention a ainsi pour objet de supprimer cette limitation.

Ces objectifs, ainsi que d'autres qui apparaîtront par la suite, sont atteints selon l'invention à l'aide d'un procédé d'accès d'au moins un terminal d'au moins un réseau de communication à des données gérées par au moins un serveur de données d'au moins un réseau externe. Selon l'invention, on définit au moins un domaine de service, correspondant à au moins une portion des données d'au moins un desdits serveurs. Lors d'un accès par ledit au moins un terminal à des données appartenant audit domaine de service, on gère, dans au moins une passerelle assurant la liaison entre lesdits réseaux, une session de service et on effectue au moins un traitement particulier.

Ainsi, le domaine de service identifie une partie des informations disponibles sur un ou plusieurs serveur(s) de sorte que l'on puisse leur appliquer un traitement qui diffère de celui qui est appliqué aux informations n'appartenant pas à ce domaine.

En d'autres termes, la présente invention propose un mécanisme mettant en oeuvre la notion de domaine de services pour les terminaux d'accès. Ceci permet notamment la mise en oeuvre, par l'opérateur du réseau, d'un mode kiosque pour l'Internet et en particulier pour l"'Internet mobile", dans le cas où le réseau externe est le réseau Internet.

On entend par "session de service" la notion suivante, dans le cas où le réseau externe est le réseau Internet : le fait qu'un utilisateur navigue sur le Web pendant une durée donnée sur un sous-domaine particulier du Web défini comme un domaine de service particulier. L'ensemble de cette navigation sur ce domaine de service particulier réalise une "session de service".

Comme expliqué ci-après, la présente invention permet à l'opérateur d'effectuer un certain nombre d'actions liées aux sessions de services.

Préférentiellement, lesdits traitements particuliers comprennent au moins une des opérations appartenant au groupe comprenant :
- une tarification particulière des données et/ou du temps de connexion audit domaine de service ;
- une notification d'entrée dans ledit domaine de services ;
- une demande de confirmation par le terminal avant l'accès audit domaine de service;
- une notification de sortie dudit domaine de services ;
- une demande de confirmation par le terminal avant la sortie dudit domaine de service ;
- un contrôle d'autorisation d'accès audit domaine de service ;
- un enrichissement d'une base de données client ;
- une transmission de données ou de message particulier, en fonction d'informations contenues dans une base de données client et/ou dans une requête vers un desdits serveurs ;
- une modification d'une requête vers un desdits serveurs ;
- une action par défaut, lorsqu'on n'accède pas à un desdits domaines de services.

Avantageusement, ladite tarification particulière tient compte d'au moins un des aspects suivants :
- un coût fixe par session de service, pour l'accès audit domaine de service ;
- un coût proportionnel au volume de données transmis lors de la session de service ;
- un coût proportionnel à la durée de la session de service ;
- un coût fonction de la date et/ou de l'heure de la session de service ;
- un coût fonction de l'identité de l'utilisateur du terminal ;
- un coût fonction du mode d'accès.

De façon avantageuse, au moins un desdits traitements particuliers met en oeuvre une étape de mesure du flux de données transmis vers ledit terminal et/ou du temps de connexion correspondant.

Avantageusement, au moins un desdits traitements particuliers met en oeuvre une étape de modification du flux de données transmis vers ledit terminal, réalisée dans la ou lesdites passerelles.

Selon une caractéristique avantageuse, après qu'une requête d'accès à des données comprises dans un desdits domaines de service a été émise par un terminal, une session de service est ouverte sauf si une telle session de service est déjà ouverte et peut être utilisée pour transmettre ladite requête.

Par ailleurs, les informations requises par le terminal peuvent provenir de différents serveurs répartis dans le réseau externe. Ces serveurs sont généralement raccordés à des passerelles distinctes, ce qui là encore complique la gestion du flux des informations.

On prévoit donc que chaque terminal accède audit réseau externe via une passerelle unique.

Ainsi, la gestion des requêtes du terminal est considérablement simplifiée. Les procédures qui doivent être centralisées par essence se trouvent sensiblement simplifiées.

Dans un mode de réalisation particulier de l'invention, lesdits serveurs de données sont organisés en sites comprenant chacun une pluralité de pages, et chaque domaine de service correspond à des pages prédéterminées d'au moins un site.

Ce type d'organisation des données correspond notamment au cas où le réseau externe est le réseau Internet.

Avantageusement, lesdits domaines de services figurent sous la forme d'une table de description accessible par la ou lesdites passerelles.

Préférentiellement, les données dudit au moins un réseau externe étant stockées dans un système de fichiers présentant une structure hiérarchique, caractérisé en ce que chaque domaine de service est représenté, dans ladite table de description, par la notation compacte d'un ou plusieurs sous-cônes de ladite structure hiérarchique.

De façon avantageuse, le procédé comprend une étape de clôture d'une session de service courante, effectuée lorsqu'au moins une condition de fin de session est vérifiée.

Avantageusement, ladite au moins une condition de fin de session de service appartient au groupe comprenant :
- détection d'une requête d'accès par le terminal à des données non comprises dans le domaine de service pour lequel la session de service courante est ouverte ;
- détection d'une requête spécifique, dite de fin de session de service, émise par le terminal ;
- détection du dépassement d'une période maximale d'inactivité du terminal au cours de la session de service courante.

L'invention vise également une passerelle assurant la liaison entre au moins un réseau de communication et au moins un réseau externe, caractérisée en ce qu'elle comprend des moyens pour mettre en oeuvre le procédé précité.

L'invention concerne aussi un serveur de données caractérisé en ce qu'au moins une portion des données qu'il contient appartient à un domaine de service, de façon à mettre en oeuvre le procédé précité.

La présente invention apparaîtra maintenant avec plus de détails dans le cadre de la description qui suit d'exemples de réalisation donnés à titre illustratif en se référant aux figures annexées qui représentent :
- la figure 1, un schéma des différents éléments intervenant dans la mise en oeuvre de l'invention, et
- la figure 2, un schéma d'une partie des centres de ressources d'un domaine de service donné, au sein de la base d'informations d'un serveur.

L'invention propose donc de définir un ou plusieurs domaine(s) de service, correspondant chacun à une partie ou à la totalité des données d'un ou plusieurs serveurs de données du réseau externe.

Les données appartenant à un même domaine de service sont par exemple elles-mêmes regroupées, dans chaque serveur de données concerné, en un ou plusieurs centres de ressources. Ainsi, dans le cas d'un réseau externe de type Internet, de même que la base d'informations est assimilable à un « site Web », un centre de ressources correspond à une ou plusieurs « pages » (associées chacune à une adresse URL) de ce site.

La notion de domaine de service au sein du réseau externe repose sur la représentation topologique du réseau externe, quelle que soit la réalisation physique de ce réseau externe.

Par exemple, pour un service de météorologie, on peut définir un domaine de service comme un ensemble d'informations figurant sur plusieurs pages de différents sites. Dans un cas particulier simple, le domaine de service correspond à une page Web unique.

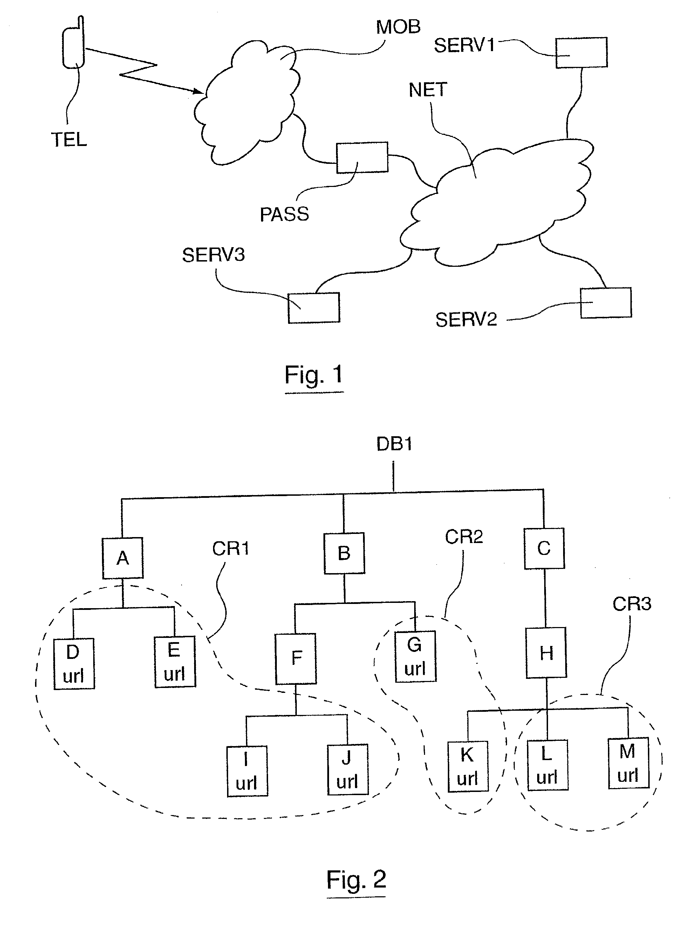

En référence à la figure 1 et dans l'exemple d'application proposé, le terminal TEL est relié au réseau de téléphonie mobile MOB, tandis que plusieurs serveurs SERV1, SERV2, SERV3 sont reliés au réseau externe NET, le réseau Internet par exemple. Une passerelle PASS (par exemple de type "WAP" ou "proxy") assure l'interconnexion des deux réseaux. On suppose dans la suite de la description que, pour accéder à des données stockées par les serveurs de données du réseau externe, le terminal émet des requêtes de type HTTP (pour "HyperText Transfer Protocol" en anglais). On suppose donc l'établissement de sessions HTTP, de type requête/réponse, entre le terminal et chaque serveur de données du réseau externe. Il est clair cependant que la présente invention s'applique plus généralement, quel que soit le type des requêtes émises par le terminal (requêtes RTSP, etc).

Lorsque le terminal émet une requête HTTP visant à accéder à des données appartenant à un domaine de service préalablement défini comme indiqué ci-dessus (par exemple par l'opérateur), la présente invention prévoit que l'on gère une session de service et que l'on effectue au moins un traitement particulier.

Ce concept est par exemple mis en oeuvre dans la passerelle PASS assurant la liaison entre les réseaux MOB et NET, si toutes les requêtes HTTP provenant d'un même terminal passent par cette passerelle. C'est par exemple le cas d'un terminal configuré pour "pointer" sur une passerelle WAP donnée.

Selon une variante, lorsque les requêtes HTTP provenant d'un même terminal passent par une pluralité de passerelles, le concept de l'invention est par exemple mis en oeuvre dans cette pluralité de passerelles. C'est par exemple le cas d'un terminal accédant au réseau externe via différents "proxys".

Dans tous les cas, une session de service comprend donc généralement une succession de sessions HTTP.

Les passerelles (ou "proxys") présentent l'avantage de permettre une mesure, et éventuellement une modification, à la volée du flux de données qui les traverse. Il est bien également possible de mesurer le flux à l'aide d'une ou plusieurs sondes, qui renseigne(nt) les passerelles. Dans le cas d'Internet, les mesures de trafic se font au niveau IP, à l'extérieur du réseau mobile de l'opérateur.

L'opérateur du réseau de téléphonie mobile peut être amené à effectuer plusieurs actions (traitements particuliers) en réponse à une requête du terminal formulée pour accéder à des données appartenant à un domaine de service.

Une première action consiste à observer (mesure du flux et/ou du temps de connexion correspondant grâce aux passerelles) la navigation du terminal au sein du réseau externe et notifier à ce terminal le fait qu'il entre dans un domaine de service identifié. Ainsi, il est désormais possible de réaliser un "kiosque de données de service", où par exemple la tarification est fonction du service demandé. On peut aussi demander à l'utilisateur du terminal de confirmer qu'il désire effectivement pénétrer dans ce domaine de service. Il est également possible d'associer des actions par défaut dans le cas où le terminal n'accède pas à un domaine de service et se trouve donc en dehors des domaines de services observés par l'opérateur.

Une deuxième action consiste à traiter la requête (modification du flux grâce aux passerelles), une requête au format défini dans le protocole « HTTP » par exemple, pour modifier les paramètres de l'en-tête HTTP ou pour adjoindre de nouveaux paramètres à cette requête. L'opérateur peut ainsi transmettre des données spécifiques au destinataire de la requête.

Une troisième action consiste à enregistrer dans une base de données l'accès du terminal au domaine de service concerné. La connaissance de cet accès peut être utilisée ultérieurement afin de cerner le profil du terminal (meilleure connaissance des clients). Elle peut également être exploitée pour diffuser sélectivement (et dynamiquement ou ultérieurement) des annonces publicitaires au terminal.

Une quatrième action consiste à réaliser un certain nombre de contrôles avant de demander au terminal la confirmation de l'accès au domaine de service. Il peut s'agir entre autres d'un contrôle d'accès pour vérifier que le terminal est habilité, d'un contrôle parental autorisant l'accès à ce domaine ou d'un contrôle relatif à l'état du compte client.

Une cinquième action consiste à notifier à l'utilisateur du terminal le fait qu'il sort du domaine de services. Il est également possible de demander à l'utilisateur de confirmer qu'il souhaite sortir du domaine de service.

Une sixième action consiste à facturer le terminal en fonction du service demandé. En sus de la prise en compte du domaine de service concerné pour définir le tarif applicable, l'opérateur peut envisager une facture comportant une partie transactionnelle (un montant fixe correspondant à l'accès au service) et une partie proportionnelle à la quantité de données transmises et /ou au temps passé dans le cadre du service.

D'autres paramètres peuvent être pris en compte pour la facturation, et notamment un coût fonction de la date et/ou l'heure de la session de service, l'identité de l'utilisateur du terminal, le mode d'accès, ... A la réception d'une première requête du terminal, la passerelle ouvre une session de service ayant pour attributs le terminal et le domaine de service concerné, avant d'entreprendre éventuellement l'une ou l'autre des actions mentionnées plus haut.

Naturellement, à la réception d'une quelconque requête du terminal, la passerelle vérifie si une session de service est déjà ouverte pour éviter d'en ouvrir une nouvelle comportant les mêmes attributs. La requête est ensuite transmise à son destinataire.

On rappelle ici que la passerelle peut être assimilée à un proxy. De préférence, le réseau mobile est conçu de sorte que les différentes requêtes du terminal soient adressées au même proxy. Cependant, si plusieurs proxys sont susceptibles de recevoir cette requête, il suffit de prévoir que chacun d'entre eux soit en relation avec un ordinateur central en charge de la gestion des différentes sessions de services.

En tout état de cause, l'organe central qui gère une session de service a des moyens pour appréhender le déroulement de cette session, notamment pour vérifier que la requête du terminal a été satisfaite. Il est également à même de mesurer la durée de la session et la quantité de données transmises.

Il est également prévu, dans la présente invention, une étape de clôture d'une session de service courante. Cette étape de clôture est effectuée lorsqu'au moins une condition de fin de session est vérifiée.

Une première condition de fin de session est la détection d'une requête d'accès par le terminal à des données non comprises dans le domaine de service pour lequel la session de service courante est ouverte.

Une seconde condition de fin de session est la détection d'une requête spécifique, dite de fin de session de service, émise par le terminal.

Une troisième condition de fin de session est la détection du dépassement d'une période maximale d'inactivité du terminal au cours de la session de service courante.

En référence à la figure 2, les informations stockées dans la base d'informations DB1 du premier serveur SERV1 sont essentiellement des fichiers repérés par le sigle url. Ainsi, les fichiers Durl et Eurl sont rattachés à un index A de premier niveau dans la structure arborescente de la base DB1. Les fichiers Iurl et Jurl sont rattachés à un index F de deuxième niveau lui-même rattaché à un index B de premier niveau. Le fichier Gurl est rattaché directement à cet index B de premier niveau. Les fichiers Kurl, Lurl et Murl sont rattachés à un index H de deuxième niveau lui-même rattaché à un index C de premier niveau.

On définit un premier centre de ressources CR1 qui comporte les fichiers Durl, Eurl, Iurl et Jurl. Un deuxième centre de ressources CR2 contient les fichiers Gurl et Kurl, et un troisième centre de ressources CR3 comprend les fichiers Lurl et Murl.

Les bases d'informations des deuxième SERV2 et troisième SERV3 serveurs sont organisées de la même manière.

A titre d'exemple, un premier domaine de service comprend le premier centre de ressources CR1 du premier serveur SERV1, un premier centre de ressource (non illustré) du deuxième serveur SERV2 et un premier centre de ressources (non illustré) du troisième serveur SERV3.

Un deuxième domaine de service comprend le deuxième centre de ressources CR2 du premier serveur SERV1, un troisième centre de ressource (non illustré) du deuxième serveur SERV2 et un deuxième centre de ressources (non illustré) du troisième serveur SERV3.

Un troisième domaine de service comprend le troisième centre de ressources CR3 du premier serveur SERV1, un deuxième centre de ressource (non illustré) du deuxième serveur SERV2 et un troisième centre de ressources (non illustré) du troisième serveur SERV3.

Avantageusement, les domaines de services figurent sous la forme d'une table de description, par exemple dans l'organe central de gestion des sessions de services.

Chaque domaine de service est par exemple représenté, dans la table de description, par la notation compacte d'un ou plusieurs sous-cônes d'une structure hiérarchique. Ceci implique que les données du réseau externe soient stockées dans un système de fichiers présentant une telle structure hiérarchique. C'est notamment le cas des pages d'informations des sites web. Par sous-cône, on entend alors soit une page (associée à une adresse URL) correspondant à une feuille de l'arbre représentant la structure hiérarchique, soit un noeud de l'arbre précité et toutes les feuilles se trouvant sous ce noeud.

Lorsqu'une session de service visant des données appartenant au premier domaine de service est ouverte, es fichiers Gurl, Kurl Lurl et Murl sont exclus de ce premier domaine de service. Cela signifie que ces fichiers sont accessibles mais ils ne le sont pas dans les conditions définies en relation avec le premier domaine de service. Pour y accéder, le terminal devrait formuler une nouvelle requête qui viserait des données appartenant, selon le cas, au deuxième ou au troisième domaine de service.

En effet, les actions engagées par l'opérateur diffèrent selon le domaine de service visé par la requête du terminal.

L'exemple de réalisation de l'invention présenté ci-dessus a été choisi pour son caractère démonstratif. Il ne serait cependant pas possible de répertorier de manière exhaustive tous les modes de réalisation que recouvre cette invention. En particulier, tout moyen décrit peut-être remplacé par un moyen équivalent sans sortir du cadre de la présente invention.

## Revendications

1. Procédé d'accès d'au moins un terminal d'au moins un réseau de communication à des données gérées par au moins un serveur de données d'au moins un réseau externe,
**caractérisé en ce qu'**on définit au moins un domaine de service, correspondant à au moins une portion des données d'au moins un desdits serveurs,
et **en ce que**, lors d'un accès par ledit au moins un terminal à des données appartenant audit domaine de service, on gère, dans au moins une passerelle assurant la liaison entre lesdits réseaux, une session de service et on effectue au moins un traitement particulier.

2. Procédé selon la revendication 1, **caractérisé en ce que** lesdits traitements particuliers comprennent au moins une des opérations appartenant au groupe comprenant :
- une tarification particulière des données et/ou du temps de connexion audit domaine de service ;
- une notification d'entrée dans ledit domaine de services ;
- une demande de confirmation par le terminal avant l'accès audit domaine de service ;
- une notification de sortie dudit domaine de services ;
- une demande de confirmation par le terminal avant la sortie dudit domaine de service ;
- un contrôle d'autorisation d'accès audit domaine de service ;
- un enrichissement d'une base de données client ;
- une transmission de données ou de message particulier, en fonction d'informations contenues dans une base de données client et/ou dans une requête vers un desdits serveurs ;
- une modification d'une requête vers un desdits serveurs ;
- une action par défaut, lorsqu'on n'accède pas à un desdits domaines de services.

3. Procédé selon la revendication 2, **caractérisé en ce que** ladite tarification particulière tient compte d'au moins un des aspects suivants :
- un coût fixe par session de service, pour l'accès audit domaine de service ;
- un coût proportionnel au volume de données transmis lors de la session de service ;
- un coût proportionnel à la durée de la session de service ;
- un coût fonction de la date et/ou de l'heure de la session de service ;
- un coût fonction de l'identité de l'utilisateur du terminal ;
- un coût fonction du mode d'accès

4. Procédé selon l'une quelconque des revendications 1 à 3, **caractérisé en ce qu'**au moins un desdits traitements particuliers met en oeuvre une étape de mesure du flux de données transmis vers ledit terminal et/ou du temps de connexion correspondant.

5. Procédé selon l'une quelconque des revendications 1 à 3, **caractérisé en ce qu'**au moins un desdits traitements particuliers met en oeuvre une étape de modification du flux de données transmis vers ledit terminal, réalisée dans la ou lesdites passerelles.

6. Procédé selon l'une quelconque des revendications 1 à 5, **caractérisé en ce que**, après qu'une requête d'accès à des données comprises dans un desdits domaines de service a été émise par un terminal, une session de service est ouverte sauf si une telle session de service est déjà ouverte et peut être utilisée pour transmettre ladite requête.

7. Procédé selon l'une quelconque des revendications 1 à 6, **caractérisé en ce que** chaque terminal accède audit réseau externe via une passerelle unique.

8. Procédé selon l'une quelconque des revendications 1 à 7, **caractérisé en ce que** lesdits serveurs de données sont organisés en sites comprenant chacun une pluralité de pages, et **en ce que** chaque domaine de service correspond à des pages prédéterminées d'au moins un site.

9. Procédé selon l'une quelconque des revendications 1 à 8, **caractérisé en ce que** lesdits domaines de services figurent sous la forme d'une table de description accessible par la ou lesdites passerelles.

10. Procédé selon la revendication 9, les données dudit au moins un réseau externe étant stockées dans un système de fichiers présentant une structure hiérarchique, **caractérisé en ce que** chaque domaine de service est représenté, dans ladite table de description, par la notation compacte d'un ou plusieurs sous-cônes de ladite structure hiérarchique.

11. Procédé selon l'une quelconque des revendications 1 à 10, **caractérisé en ce qu'**il comprend une étape de clôture d'une session de service courante, effectuée lorsqu'au moins une condition de fin de session est vérifiée.

12. Procédé selon la revendication 11, **caractérisé en ce que** ladite au moins une condition de fin de session de service appartient au groupe comprenant :
- détection d'une requête d'accès par le terminal à des données non comprises dans le domaine de service pour lequel la session de service courante est ouverte ;
- détection d'une requête spécifique, dite de fin de session de service, émise par le terminal;
- détection du dépassement d'une période maximale d'inactivité du terminal au cours de la session de service courante.

13. Passerelle assurant la liaison entre au moins un réseau de communication et au moins un réseau externe, **caractérisée en ce qu'**elle comprend des moyens pour mettre en oeuvre le procédé selon l'une quelconque des revendications 1 à12.

14. Serveur de données **caractérisé en ce qu'**au moins une portion des données qu'il contient appartient à un domaine de service, de façon à mettre en oeuvre le procédé selon l'une quelconque des revendications 1 à 12.
